# EUROPEAN PATENT APPLICATION

(11) **EP 4 663 444 A1**
(43) Date of publication of application: **17.12.2025**
(21) Application number: 24182359.0
(22) Date of filing: 14.06.2024
(51) Int. Cl.: B60K 1/04

(54) **A BATTERY SUSPENSION ARRANGEMENT WITH PIVOTABLE CONNECTION TO A VEHICLE FRAME**

(71) Applicant: VOLVO TRUCK CORPORATION, 405 08 Göteborg (SE)
(72) Inventor: LANDVIK, Sondre, 417 61 GÖTEBORG (SE)
(74) Representative: Kransell & Wennborg KB

(57) **Abstract**

The present disclosure relates to a battery suspension arrangement, comprising a first elongated battery support structure comprising a battery support surface, a first elongated member comprising a first end and a second end, and a second elongated member comprising a first end and a second end, wherein the battery suspension system comprises a pivot joint at which the first end of the second elongated member is pivotably connected to the second portion of the first elongated battery support structure.

## Description

### TECHNICAL FIELD

The disclosure relates generally to suspension of traction batteries. In particular aspects, the disclosure relates to a battery suspension arrangement with a pivotable connection to a vehicle frame. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric machines have been increasingly popular, both for cars as well as for trucks and other heavy duty vehicles.

For heavy duty vehicles, the energy storage systems, often in the form of traction batteries, need to be relatively large in size to be able to contain a sufficient level of energy such that the vehicle can be operated at an acceptable range using the electric traction motors. The large energy storage systems are in turn of substantial weight, and there is a challenged to position and assemble these energy storage systems to the frame of the heavy duty vehicle in a convenient and efficient manner.

### SUMMARY

According to a first aspect of the disclosure, there is provided a battery suspension arrangement for a vehicle, the battery suspension arrangement comprising a first elongated battery support structure comprising a battery support surface configured to support a traction battery, a first elongated member comprising a first end and a second end, the first end being connected to a first portion of the first elongated battery support structure, wherein the second end is configured to be attached to a first frame member of the vehicle, and a second elongated member comprising a first end and a second end, the first end being connected to a second portion of the first elongated battery support structure, wherein the second end is configured to be attached to a second frame member of the vehicle, wherein the battery suspension system comprises a pivot joint at which the first end of the second elongated member is pivotably connected to the second portion of the first elongated battery support structure.

The first aspect of the disclosure may seek to provide a battery suspension arrangement that enables for a simplified and time efficient assembly and disassembly process for connecting the battery suspension arrangement to the frame of the vehicle. A technical benefit may include that, during an assembly process, the second elongated member can be pivoted/tilted such that an entire energy storage arrangement, including the battery suspension arrangement and the traction battery, can slide below the first and second frame members. When the energy storage arrangement is in position, the second elongated member can be pivoted back to a position where it can be attached to the second frame member. The battery suspension arrangement hereby enables for a complete pre-assembly of the energy storage arrangement before final assembly to the first and second frame members. Hence, a less time consuming and more efficient assembly to the first and second frame members can be obtained compared to part-by-part assembly of the of the energy storage arrangement to the frame.

Optionally in some examples, including in at least one preferred example, the second elongated member is configured to move in a pendulum motion along a geometric plane by rotating the first end of the second elongated member at the pivot joint, the geometric plane being parallel to the extensions of the first elongated battery support structure and the first elongated member. A technical benefit may include that pivotal rotation of the second elongated member can be made by an operator at the assembly line.

Optionally in some examples, including in at least one preferred example, the second elongated member is controllable between a first state and a second state by rotating the first end of the second elongated member at the pivot joint.

Optionally in some examples, including in at least one preferred example, the second end of the second elongated member is arranged to attach to the second frame member when the second elongated member is arranged in the second state.

Optionally in some examples, including in at least one preferred example, the first elongated battery support structure comprises a first bracket connected to the first elongated member, a second bracket connected to the second elongated member, and an elongated frame connected between the first and second brackets, the battery support surface being arranged on the elongated frame. A technical benefit may include that the traction battery can be supported by the first elongated battery support structure in a reliable manner. Also, the elongated frame can absorb stresses and strains exposed to the first elongated battery support structure during operation of the vehicle to which the battery suspension is attached.

Optionally in some examples, including in at least one preferred example, the first bracket comprises a first bushing and the second bracket comprises a second bushing, the first and second bushings connecting the elongated frame to the respective first and second brackets. A technical benefit may include that a relatively simple interface is provided between the elongated frame and the respective first and second brackets.

Optionally in some examples, including in at least one preferred example, the battery suspension arrangement comprises a fastening element configured to fixate the second elongated member to the first elongated battery support structure. A technical benefit may include that a rigid connection of the second elongated member can be obtained. In detail, the second elongated member may not be able to pivot after the battery suspension arrangement is attached to the first and second frame members of the vehicle, thereby further improving the strength at the pivot joint.

Optionally in some examples, including in at least one preferred example, the first elongated member is fixedly attached to the first elongated battery support structure. A technical benefit may include that only the second elongated member is allowed to pivot, thereby enabling for improved strength of the battery suspension arrangement.

Optionally in some examples, including in at least one preferred example, the battery suspension arrangement further comprises a second elongated battery support structure comprising a second battery support surface configured to support the traction battery on an opposite side of the traction battery compared to the battery support surface. A technical benefit may include that an improved suspension of the traction battery can be obtained.

Optionally in some examples, including in at least one preferred example, the battery suspension arrangement comprises a third elongated member comprising a first end and a second end, the first end being connected to a first portion of the second elongated battery support structure and the second end is configured to be attached to the first frame member, and a fourth elongated member comprising a first end and a second end, the first end being connected to a second portion of the second elongated battery support structure and the second end is configured to be attached to the second frame member.

Optionally in some examples, including in at least one preferred example, the battery suspension arrangement comprises a second pivot joint at which the first end of the fourth elongated member is pivotably connected to the second portion of the second elongated battery support structure. A technical benefit may include that the second elongated member as well as the fourth elongated member can be pivoted. The second and fourth elongated members may be parallel with each other and the energy storage arrangement may hereby slide below the first and second frame members in a direction substantially perpendicular to an extension of the first and second frame members.

Optionally in some examples, including in at least one preferred example, a distance between the first end of the first elongated member and the first end of the second elongated member is shorter than a distance between the first end of the third elongated member and the first end of the fourth elongated member. A technical benefit may include that, as will be evident from the below description, the additional distance may enable for the provision of additional bushings between the first end of the third elongated member and the first end of the fourth elongated member.

Optionally in some examples, including in at least one preferred example, the second elongated battery support structure comprises a third bracket connected to the third elongated member, a fourth bracket connected to the fourth elongated member, and a second elongated frame connected between the third and fourth brackets, the second battery support surface being arranged on the second elongated frame. A technical benefit may include that a traction battery may be properly supported by the elongated frame and the second elongated frame.

Optionally in some examples, including in at least one preferred example, the third bracket comprises a third bushing and the fourth bracket comprises a fourth bushing, the third and fourth bushings connecting the second elongated frame to the respective third and fourth brackets.

Optionally in some examples, including in at least one preferred example, the third bracket comprises an additional third bushing and the fourth bracket comprises an additional fourth bushing. A technical benefit may include that one or more additional vehicle components can be connected to the additional third and fourth bushings.

Optionally in some examples, including in at least one preferred example, the additional fourth bushing is arranged between the third and fourth bushings.

Optionally in some examples, including in at least one preferred example, the additional third bushing and the additional fourth bushing are configured to connect a third elongated frame to the respective third and fourth brackets at an opposite position of the third and fourth brackets compared to a position of the second elongated frame. A technical benefit may include that the third and fourth brackets may serve the dual purpose of connecting the traction battery to the second elongated frame as well as connecting a second traction battery to the third elongated frame. The third bracket may hence be connected between the second and third elongated frames, where the third bushing connects to the second elongated frame and the fourth bushing connects to the third elongated frame. The same applies for the fourth bracket. A triangular connection interface may be provided between the third bracket and the first frame member, and a triangular connection interface may be provided between the fourth bracket and the second frame member.

According to a second aspect, there is provided an energy storage arrangement, comprising a traction battery supported by a battery suspension arrangement according to any one of the examples described above in relation to the first aspect.

Effects and features of the second aspect are largely analogous to those described above in relation to the first aspect.

According to a third aspect, there is provided a vehicle comprising a battery suspension arrangement according to any one of the examples described above in relation to the first aspect, or an energy storage arrangement according to the above described second aspect.

Effects and features of the third aspect are largely analogous to those described above in relation to the first aspect.

According to a fourth aspect, there is provided a method of attaching a battery suspension arrangement, of any one of the examples described above in relation to the first aspect, to a first and a second frame member of a vehicle, the method comprising: positioning the second elongated member in a second state, in which the second end of the second elongated member is arranged at a vertically lower position compared to a vertical position of the second end of the first elongated member, by rotating the first end of the second elongated member at the pivot j oint, moving the battery suspension arrangement in a transversal direction below the first and second frame members such that the second elongated member passes below the first frame member until the second end of the first elongated member is arranged in abutment with the first frame member, positioning the second elongated member in a first state, in which the second end of the second elongated member is arranged in abutment with the second frame member, by rotating the first end of the second elongated member at the pivot joint, attaching the second end of the first elongated member to the first frame member, and attaching the second end of the second elongated member to the second frame member.

The second aspect of the disclosure may seek to reduce the time of assembling the battery suspension arrangement to the first and second frame members of the vehicle. A technical benefit may include A technical benefit may include that, during an assembly process, the second elongated member is pivoted/tilted such that an entire energy storage arrangement, including the battery suspension arrangement and the traction battery, slides below the first and second frame members. When the energy storage arrangement is in position, the second elongated member is pivoted back to a position where it is attached to the second frame member. The battery suspension arrangement hereby enables for a complete pre-assembly of the energy storage arrangement before final assembly to the first and second frame members. Hence, a less time consuming and more efficient assembly to the first and second frame members can be obtained compared to part-by-part assembly of the of the energy storage arrangement to the frame.

Further effects and features of the fourth aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a battery suspension arrangement and an energy storage arrangement according to an example,
Fig. 3 is an exemplary detailed illustration of an elongated member of the battery suspension arrangement according to an example,
Fig. 4 is an exemplary detailed illustration of the pivot joint of the battery suspension arrangement according to an example,
Fig. 5 is an exemplary illustration of an energy storage arrangement according to another example, and
Fig. 6 is an exemplary flow chart of a method of attaching a battery suspension arrangement to a first and second frame members of the vehicle.

### DETAILED DESCRIPTION

The detailed description set forth below provides information and examples of the disclosed technology with sufficient detail to enable those skilled in the art to practice the disclosure.

The disclosure presented in the following aims at describing a battery suspension arrangement that enables for simplified and efficient attachment to a first and a second frame member of a vehicle. The battery suspension arrangement is configured to suspend a traction battery and the assembly process of connecting the traction battery to the first and second frame members may hereby be performed in an efficient and simplified manner.

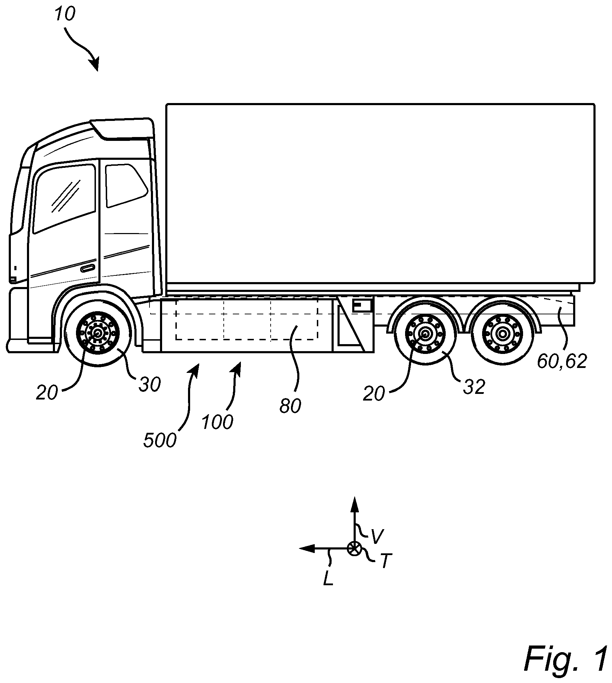

With reference to Fig. 1 which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprises a single electric traction motor connected to the wheels via a conventional propulsion shaft (not shown). The at least one electric traction motor 20 is configured to apply propulsive power to the wheels of the vehicle during propulsion, and to generate electric power during braking.

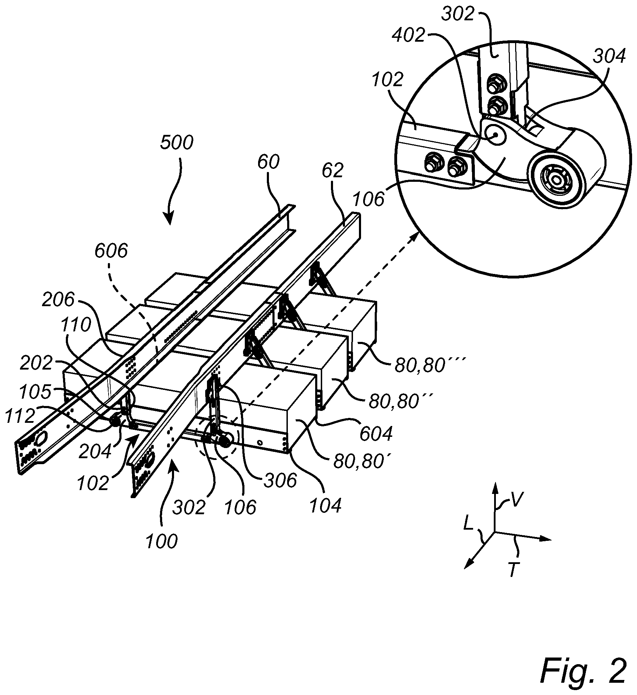

The vehicle further comprises an energy storage arrangement 500. The energy storage arrangement 500 comprises a traction battery 80 configured to feed electric power to the electric traction motor 20 during propulsion of the vehicle 10 and to receive electric power during braking. The traction battery is suspended to a first 60 and a second 62 frame member of the vehicle 10 by means of a battery suspension arrangement 100. The first 60 and second 62 frame members, which are illustrated in further detail in e.g. Fig. 2 preferably extends in a longitudinal direction L of the vehicle 10. The vehicle 10 can also be defined in a vertical direction V, and a transversal direction T. In order to describe the energy storage arrangement 500 and the battery suspension arrangement 100 in further detail, reference is now made to Fig. 2.

Fig. 2 is an exemplary illustration of the battery suspension arrangement 100 and the energy storage arrangement 500 according to an example. As indicated above, the energy storage arrangement 500 comprising the battery suspension arrangement 100 and the traction battery 80. In the example depicted in Fig. 2, the energy storage arrangement 500 comprises a first traction battery 80', a second traction battery 80" and a third traction battery 80"'. By traction battery should be understood one or more battery modules comprises a plurality of battery cells. Thus, the first traction battery 80' depicted in Fig. 2 may comprise a plurality of battery modules, where each battery module comprises one or more battery cells. The traction battery 80 extends in the transversal direction T below the frame, i.e. below the first 60 and second 62 frame members of the vehicle 10. Also, the traction batteries 80 exemplified in Fig. 2 are arranged side by side with each other in the longitudinal direction L of the vehicle 10.

The battery suspension arrangement 100 is arranged to suspend the traction batteries 80 to the first 60 and second 62 frame members of the vehicle 10. The battery suspension arrangement 100 comprises a first elongated battery support structure 102. The first elongated battery support structure 102 may preferably extend in the transversal direction T and be substantially parallel to the ground level. Further, the first elongated battery support structure 102 comprises a battery support surface 104 onto which the traction battery is arranged in abutment, i.e. the traction battery 80 is supported onto the battery support surface 104.

The battery suspension arrangement 100 also comprises a first elongated member 202 and a second elongated member 302. The first 202 and second 302 elongated members extends in the vertical direction V of the vehicle 10. The first elongated member 202 comprises a first end 204 connected to a first portion 105 of the first elongated battery support structure 102 and a second end 206 attached to the first frame member 60 of the vehicle 10. Thus, the first elongated member 202 extends from the first portion 105 of the first elongated battery support structure 102 to the first frame member 60. The first portion 105 of the first elongated battery support structure 102 may be a first outer end portion of the first elongated battery support structure 102.

The second elongated member 302 comprises a first end 304 connected to a second portion 106 of the first elongated battery support structure 102 and a second end 306 attached to the second frame member 62 of the vehicle 10. Thus, the second elongated member 302 extends from the second portion 106 of the first elongated battery support structure 102 to the second frame member 62. The second portion 106 of the first elongated battery support structure 102 may be a second outer end portion of the first elongated battery support structure 102, where the first and second outer end portions are arranged on opposite sides of the elongated battery support structure 102 in the transversal direction T of the vehicle 10.

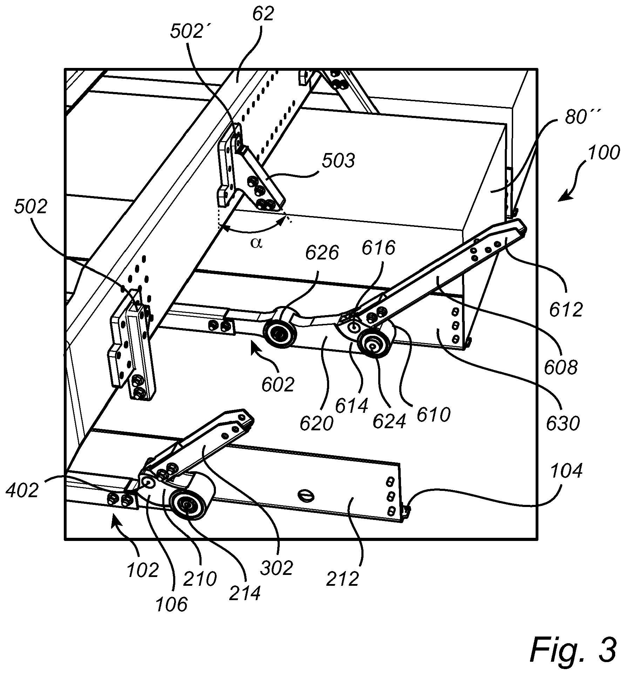

Furthermore, the battery suspension arrangement 100 also comprises pivot joint 402. In particular, the first end 304 of the second elongated member 302 is pivotably connected to the second portion 106 of the first elongated battery support structure 102 at the pivot joint 402. The second elongated member 302 can hereby be controlled to move in a pendulum motion at the pivot joint 402 between a first state, illustrated in Fig. 3, and a second state illustrated in Fig. 2. Hence, in the second state illustrated in Fig. 2, the second end 304 of the second elongated member 302 can be attached to the second frame member 62. The pendulum motion is thus a motion in a geometric plane which is parallel to the extensions of the first elongated battery support structure 102 and the first 202 and second 302 elongated members. In other words, the second elongated member 302 can be arranged to move in a pendulum motion in a geometric plane spanning in the transversal T and vertical V directions of the vehicle 10.

The first elongated member 202 on the other hand may preferably be fixedly attached to the first elongated battery support structure 102. In other words, no pivot joint may be present between the first end 204 of the first elongated member 202 and the first portion 105 of the first elongated battery support structure 102. When the second elongated member 302 assumes the above described second state, a distance in the transversal direction T between the second end 206 of the first elongated member 202 and the second end 306 of the second elongated member 302 is hereby shorter compared to the distance in the transversal direction T between the second end 206 of the first elongated member 202 and the second end 306 of the second elongated member 302 when the second elongated member 302 assumes the first state. In other words, the second ends of the first 202 and second 302 elongated members are arranged closer to each other in the transversal direction T when the second elongated member 302 is arranged in the second state compared to when being arranged in the first state.

With further reference to Fig. 3, which illustrates the second elongated member 302 when being arranged in the first state according to an example. In Fig. 3, the traction battery has been omitted for simplifying for the skilled reader.

The battery support structure 102 comprises a first bracket 110 which can be seen in Fig. 2. The first bracket 110 is connected to the first elongated member 202. Thus, when the battery suspension arrangement 100 is arranged in the position depicted in Fig. 2, the first elongated member 202 is arranged between the first bracket 110 and the first frame member 60. As depicted in detail in Fig. 3, the battery support structure 102 also comprises a second bracket 210. The second bracket 210 is connected to the second elongated member 302. Hence, the pivot joint 402 is arranged on the second bracket 210 and the second elongated member 302 is arranged between the second bracket 210 and the second frame member 62 when arranged in the second state which is illustrated in Fig. 2.

As illustrated in detail in Fig. 3, the second elongated member 302 is connectable to the second frame element 62 via a second frame bracket 502. Although not illustrated in the figures, the first elongated member 202 may in a similar vein be connected to the first frame member 60 a first frame bracket.

Furthermore, the first elongated battery support structure 102 comprises an elongated frame 212. The elongated frame 212 is connected between the first 110 and second 210 brackets. Preferably, the above described battery support surface 104 may be arranged on the elongated frame 212. The traction battery 80 is thus arranged on the battery support surface 104 of the elongated frame 212. The first bracket 110 depicted in Fig. 2 also comprises a first bushing 112. In a similar vein, the second bracket 210 comprises a second bushing 214. The elongated frame 212 is hereby connected to the first 112 and second 214 bushings.

Moreover, and as can be seen in Fig. 3, the battery suspension arrangement 100 further comprises a second elongated battery support structure 602. The second elongated battery support structure 602 comprises a second battery support surface 604 which is omitted in Fig. 3 but illustrated in Fig. 2. The second battery support surface 604 is configured to support the traction battery 80 on an opposite side of the traction battery 80 in the longitudinal direction L of the vehicle 10 compared to the above described battery support surface 104.

The battery suspension arrangement 100 further comprises a third elongated member 606 (see position in Fig. 2) and a fourth 608 elongated member. The third elongated member 606 preferably has the same shape and dimension as the above described first elongated member 202. The third elongated member 606 thus comprises a first end and a second end, wherein the first end is connected to a first portion of the second elongated battery support structure 602 while the second end is configured to be attached to the first frame member 60. In a similar vein, the fourth elongated member 608 comprises a first end 610 and a second end 612, where the first end 610 is connected to a second portion 614 of the second elongated battery support structure 602, while the second end 612 is configured to be attached to the second frame member 62. As can be seen in Fig. 3, the second end 612 is configured to be attached to the second frame member 62 via an additional second frame bracket 502'.

As is further illustrated in the exemplified Fig. 3, a distance between the first end 204 of the first elongated member 202 and the first end 304 of the second elongated member 302, i.e. the distance in the transversal direction T, is shorter than a distance between the first end of the third elongated member and the first end 610 of the fourth elongated member 608. As such, the exemplified fourth elongated member 608 is connected to the second elongated battery support structure 602 at a position transversally outside the second portion 106 of the first elongated battery support structure 102. The fourth elongated member 608 is thus connected to the second frame member 62 at an angle α in the transversal T and vertical plane V. The additional second frame bracket 502' may therefore preferably comprise a connecting portion 503 arranged in a similar angle α. The battery suspension arrangement 100 thus comprises a second pivot joint 616 at which the first end 610 of the fourth elongated member 608 is pivotably connected to the second portion 614 of the second elongated battery support structure 602. The fourth elongated member 608 can thus assume a first and second state in the same manner as described above for the second elongated member 302.

Furthermore, the second elongated battery support structure 602 comprises a third bracket connected to the third elongated member. The third bracket is not illustrated but preferably comprises the same features and having the same design as the above described first bracket. The second elongated battery support structure 602 also comprises a fourth bracket 620 connected to the fourth elongated member 608. In addition, the second elongated battery support structure 602 also comprises a second elongated frame (622 in Fig. 2) connected between the third and fourth 620 brackets. Hereby, the second battery support surface 604 is preferably arranged on the second elongated frame 622.

Moreover, although not illustrated in the drawings, the third bracket comprises a third bushing arranged in a similar vein as the first bushing 112. The fourth bracket 620 comprises a fourth bushing 624. In a similar vein as for the above described first and second bushings, the third and fourth bushings are connecting the second elongated frame 622 to the respective third and fourth brackets 620.

As also depicted in Fig. 3, the fourth bracket 620 further comprises an additional fourth bushing 626. The third bracket may also comprise an additional third bushing. The third and fourth additional brushing may preferably be arranged inside of the third and fourth bushings. In detail, and foe example, the fourth additional bushing 626 may be arranged between the third and fourth bushings. The additional third and fourth 626 brackets may be arranged to connect a third elongated frame 630 to the respective third and fourth brackets. In particular, the third elongated frame 630 is arranged at an opposite position of the third and fourth brackets compared to a position of the second elongated frame. The second traction battery 80" may hereby be supported by the third elongated frame 630 and the third and fourth brackets hereby supports both of the first 80' and second 80" traction batteries.

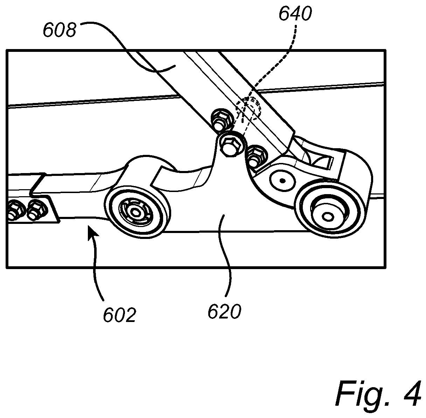

With reference to Fig. 4 which is an exemplified detailed illustration of the fourth bracket 620 and the fourth elongated member 608 of the battery suspension arrangement 100 according to an example. In particular, the battery suspension arrangement 100 here further comprises a fastening element 640. The fastening element 640 is configured to fixate the fourth elongated member 608 to the second battery support structure 602. In the exemplification of Fig. 4, the fastening element 640 fixates the fourth elongated member 608 to the fourth bracket 626 when the fourth elongated member 608 assumes the second state for connection to the second frame member 62. The fastening element 640 may be a bolt and nut as exemplified in Fig. 4 although other fastening elements or arrangements are conceivable. Further, it should be noted that a corresponding fastening element may be provided for fixating the second elongated member 302 to the first elongated battery support structure 102.

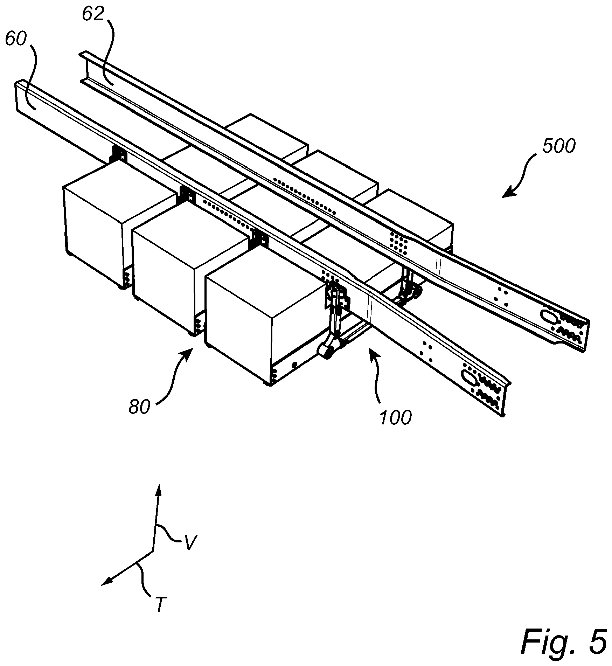

Turning to Fig. 5 which is an exemplary illustration of an energy storage arrangement 500 according to another example. In particular, the traction batteries 80 are arranged in an L-shaped configuration for which above described battery suspension arrangement 100 may be particular advantageous. In further detail, the traction batteries comprises an extension in the transversal direction T below the first 60 and second 62 frame members. In addition, the traction batteries extend in the vertical direction V outside of the first frame member 60.

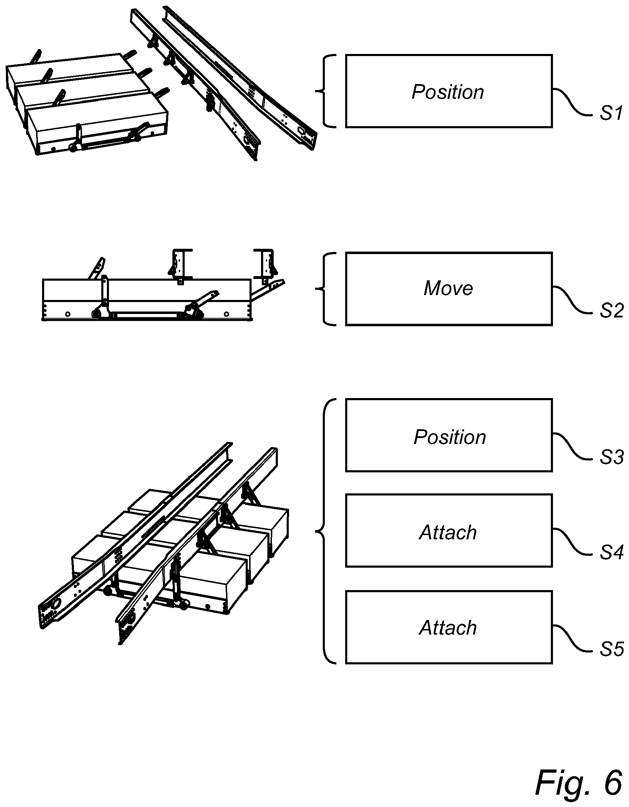

Turning now to Fig. 6 which is an exemplary flow chart of a method of attaching the battery suspension arrangement 100 to the first 60 and second 62 frame members of the vehicle 10. At an initial stage, the second elongated member 302 is positioned S1 in the second state, in which the second end 304 of the second elongated member 302 is arranged at a vertically lower position compared to a vertical position of the second end 206 of the first elongated member 202. This is achieved by rotating the first end 304 of the second elongated 302 member at the pivot joint. In a similar vein, also the fourth elongated member described above is preferably positioned in the second state.

The battery suspension arrangement 100 and hence the energy storage arrangement 500 is thereafter moved S2 in the transversal direction T below the first 60 and second 62 frame members. The battery suspension arrangement 100 is moved in the transversal direction T such that the second elongated member 302 passes below the first frame member 60 as well as the second frame member 62 until the second end 206 of the first elongated member 202 is arranged in abutment with the first frame member 60.

The second elongated member 302 is thereafter positioned S3 in the first state. Hereby, the second end 304 of the second elongated member 302 is arranged in abutment with the second frame member 62. This is achieved by rotating the first end 304 of the second elongated member 302 at the pivot joint in an opposite direction compared to when positioning the second elongated member 302 in the second state described above. In a similar vein, also the fourth elongated member described above is preferably positioned in the first state.

The second end 206 of the first elongated member 202 is then attached S4 to the first frame member 60 and the second end 306 of the second elongated member 302 is attached S5 to the second frame member 62.

It should be observed that the second end 206 of the first elongated member 202 can be attached to the first frame member 60 before, or contemporaneously to, positioning the second elongated member 302 in the first state.

### EXAMPLE LIST

Example 1. A battery suspension arrangement for a vehicle, the battery suspension arrangement comprising: a first elongated battery support structure comprising a battery support surface configured to support a traction battery, a first elongated member comprising a first end and a second end, the first end being connected to a first portion of the first elongated battery support structure, wherein the second end is configured to be attached to a first frame member of the vehicle, and a second elongated member comprising a first end and a second end, the first end being connected to a second portion of the first elongated battery support structure, wherein the second end is configured to be attached to a second frame member of the vehicle, wherein the battery suspension system comprises a pivot joint at which the first end of the second elongated member is pivotably connected to the second portion of the first elongated battery support structure.

Example 2. The battery suspension arrangement of example 1, wherein the second elongated member is configured to move in a pendulum motion along a geometric plane by rotating the first end of the second elongated member at the pivot j oint, the geometric plane being parallel to the extensions of the first elongated battery support structure and the first elongated member.

Example 3. The battery suspension arrangement of any one of examples 1 or 2, wherein the second elongated member is controllable between a first state and a second state by rotating the first end of the second elongated member at the pivot joint.

Example 4. The battery suspension arrangement of example 3, wherein the second end of the second elongated member is arranged to attach to the second frame member when the second elongated member is arranged in the second state.

Example 5. The battery suspension arrangement of any one of the preceding examples, wherein the first elongated battery support structure comprises a first bracket connected to the first elongated member, a second bracket connected to the second elongated member, and an elongated frame connected between the first and second brackets, the battery support surface being arranged on the elongated frame.

Example 6. The battery suspension arrangement of example 5, wherein the first bracket comprises a first bushing and the second bracket comprises a second bushing, the first and second bushings connecting the elongated frame to the respective first and second brackets.

Example 7. The battery suspension arrangement of any one of the preceding examples, wherein the battery suspension arrangement comprises a fastening element configured to fixate the second elongated member to the first elongated battery support structure.

Example 8. The battery suspension arrangement of any one of the preceding examples, wherein the first elongated member is fixedly attached to the first elongated battery support structure.

Example 9. The battery suspension arrangement of any one of the preceding examples, wherein the battery suspension arrangement further comprises a second elongated battery support structure comprising a second battery support surface configured to support the traction battery on an opposite side of the traction battery compared to the battery support surface.

Example 10. The battery suspension arrangement of example 9, wherein the battery suspension arrangement comprises: a third elongated member comprising a first end and a second end, the first end being connected to a first portion of the second elongated battery support structure and the second end is configured to be attached to the first frame member, and a fourth elongated member comprising a first end and a second end, the first end being connected to a second portion of the second elongated battery support structure and the second end is configured to be attached to the second frame member.

Example 11. The battery suspension arrangement of example 10, wherein the battery suspension arrangement comprises a second pivot joint at which the first end of the fourth elongated member is pivotably connected to the second portion of the second elongated battery support structure.

Example 12. The battery suspension arrangement of example 11, wherein a distance between the first end of the first elongated member and the first end of the second elongated member is shorter than a distance between the first end of the third elongated member and the first end of the fourth elongated member.

Example 13. The battery suspension arrangement of any one of examples 9 - 12, wherein the second elongated battery support structure comprises a third bracket connected to the third elongated member, a fourth bracket connected to the fourth elongated member, and a second elongated frame connected between the third and fourth brackets, the second battery support surface being arranged on the second elongated frame.

Example 14. The battery suspension arrangement of example 13, wherein the third bracket comprises a third bushing and the fourth bracket comprises a fourth bushing, the third and fourth bushings connecting the second elongated frame to the respective third and fourth brackets.

Example 15. The battery suspension arrangement of example 14, wherein the third bracket comprises an additional third bushing and the fourth bracket comprises an additional fourth bushing.

Example 16. The battery suspension arrangement of example 15, wherein the additional fourth bushing is arranged between the third and fourth bushings.

Example 17. The battery suspension arrangement of any one of examples 15 or 16, wherein the additional third bushing and the additional fourth bushing are configured to connect a third elongated frame to the respective third and fourth brackets at an opposite position of the third and fourth brackets compared to a position of the second elongated frame.

Example 18. An energy storage arrangement, comprising a traction battery supported by a battery suspension arrangement according to any one of the preceding examples.

Example 19. A vehicle comprising a battery suspension arrangement according to any one of examples 1 - 17, or an energy storage arrangement according to example 18.

Example 20. A method of attaching a battery suspension arrangement of any one of examples 1 - 17 to a first and a second frame member of a vehicle, the method comprising: positioning the second elongated member in a second state, in which the second end of the second elongated member is arranged at a vertically lower position compared to a vertical position of the second end of the first elongated member, by rotating the first end of the second elongated member at the pivot joint, moving the battery suspension arrangement in a transversal direction below the first and second frame members such that the second elongated member passes below the first frame member until the second end of the first elongated member is arranged in abutment with the first frame member, positioning the second elongated member in a first state, in which the second end of the second elongated member is arranged in abutment with the second frame member, by rotating the first end of the second elongated member at the pivot joint, attaching the second end of the first elongated member to the first frame member, and attaching the second end of the second elongated member to the second frame member.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery suspension arrangement (100) for a vehicle, the battery suspension arrangement comprising:
a first elongated battery support structure (102) comprising a battery support surface (104) configured to support a traction battery (80),
a first elongated member (202) comprising a first end (204) and a second end (206), the first end being connected to a first portion of the first elongated battery support structure, wherein the second end is configured to be attached to a first frame member of the vehicle, and
a second elongated member (302) comprising a first end (304) and a second end (306), the first end being connected to a second portion (106) of the first elongated battery support structure, wherein the second end (306) is configured to be attached to a second frame member of the vehicle,
wherein the battery suspension system comprises a pivot joint (402) at which the first end (304) of the second elongated member (302) is pivotably connected to the second portion of the first elongated battery support structure.

2. The battery suspension arrangement of claim 1, wherein the second elongated member (302) is configured to move in a pendulum motion along a geometric plane by rotating the first end (304) of the second elongated member (302) at the pivot joint (402), the geometric plane being parallel to the extensions of the first elongated battery support structure and the first elongated member.

3. The battery suspension arrangement of any one of claims 1 or 2, wherein the second elongated member is controllable between a first state and a second state by rotating the first end of the second elongated member at the pivot joint.

4. The battery suspension arrangement of claim 3, wherein the second end of the second elongated member is arranged to attach to the second frame member when the second elongated member is arranged in the second state.

5. The battery suspension arrangement of any one of the preceding claims, wherein the first elongated battery support structure comprises a first bracket connected to the first elongated member, a second bracket (210) connected to the second elongated member, and an elongated frame (212) connected between the first and second brackets, the battery support surface being arranged on the elongated frame.

6. The battery suspension arrangement of claim 5, wherein the first bracket comprises a first bushing and the second bracket (210) comprises a second bushing (214), the first and second bushings connecting the elongated frame to the respective first and second brackets.

7. The battery suspension arrangement of any one of the preceding claims, wherein the battery suspension arrangement comprises a fastening element (640) configured to fixate the second elongated member (302) to the first elongated battery support structure (102).

8. The battery suspension arrangement of any one of the preceding claims, wherein the first elongated member is fixedly attached to the first elongated battery support structure.

9. The battery suspension arrangement of any one of the preceding claims, wherein the battery suspension arrangement further comprises a second elongated battery support structure (602) comprising a second battery support surface (604) configured to support the traction battery (80) on an opposite side of the traction battery compared to the battery support surface.

10. The battery suspension arrangement of claim 9, wherein the battery suspension arrangement comprises:
a third elongated member comprising a first end and a second end, the first end being connected to a first portion of the second elongated battery support structure and the second end is configured to be attached to the first frame member, and
a fourth elongated member (608) comprising a first end (610) and a second end (612), the first end being connected to a second portion of the second elongated battery support structure and the second end is configured to be attached to the second frame member.

11. The battery suspension arrangement of claim 10, wherein the battery suspension arrangement comprises a second pivot joint (616) at which the first end of the fourth elongated member is pivotably connected to the second portion of the second elongated battery support structure.

12. The battery suspension arrangement of claim 11, wherein a distance between the first end of the first elongated member and the first end of the second elongated member is shorter than a distance between the first end of the third elongated member and the first end of the fourth elongated member.

13. An energy storage arrangement, comprising a traction battery supported by a battery suspension arrangement according to any one of the preceding claims.

14. A vehicle comprising a battery suspension arrangement according to any one of claims 1 - 12, or an energy storage arrangement according to claim 13.

15. A method of attaching a battery suspension arrangement of any one of claims 1 - 12 to a first and a second frame member of a vehicle, the method comprising:
positioning (S1) the second elongated member (302) in a second state, in which the second end (306) of the second elongated member (302) is arranged at a vertically lower position compared to a vertical position of the second end (206) of the first elongated member (202), by rotating the first end of the second elongated member at the pivot joint,
moving (S2) the battery suspension arrangement (100) in a transversal direction (T) below the first (60) and second (62) frame members such that the second elongated member (302) passes below the first frame member (60) until the second end (206) of the first elongated member (202) is arranged in abutment with the first frame member (60),
positioning (S3) the second elongated member in a first state, in which the second end of the second elongated member (302) is arranged in abutment with the second frame member (62), by rotating the first end of the second elongated member at the pivot joint,
attaching (S4) the second end (206) of the first elongated member (202) to the first frame member (60), and
attaching (S5) the second end (306) of the second elongated member (302) to the second frame member (62).
